# EUROPÄISCHE PATENTANMELDUNG

(11) **EP 1 124 206 A1**
(43) Veröffentlichungstag der Anmeldung: **16.08.2001**
(21) Anmeldenummer: 00102634.3
(22) Anmeldetag: 08.02.2000
(51) Int. Cl.: G07F 7/12, H04L 9/32

(54) **Verfahren und Anordnung zur gegenseitigen Authentifizierung zweier Datenverarbeitungseinheiten**

(71) Anmelder: Infineon Technologies AG, 81541 München (DE)
(72) Erfinder: Pockrandt, Wolfgang, 85293 Reichertshausen (DE); Hess, Erwin, 85521 Ottobrunn (DE)
(74) Vertreter: Hermann, Uwe, Dipl.-Ing.

(57) **Zusammenfassung**

Die vorliegende Erfindung betrifft ein Verfahren und eine Anordnung zur gegenseitigen Authentifizierung zweier Datenverarbeitungseinheiten. Die gegenseitige Authentifizierung zweier Datenverarbeitungseinheiten wird üblicherweise in zwei getrennten, hintereinander ausgeführten Authentifizierungen durchgeführt. Es wird üblicherweise ein Challenge-Response-Verfahren verwendet. Dazu wird eine erste Challenge von einer ersten Datenverarbeitungseinheit (1) zu einer zweiten Datenverarbeitungseinheit (2) gesendet, die eine erste Response zurück übermittelt. Erfindungsgemäß wird eine zweite Response von der ersten Datenverarbeitungseinheit (1) erzeugt und an die zweite Datenverarbeitungseinheit (2) übermittelt.

## Beschreibung

Die vorliegende Erfindung betrifft ein Verfahren und eine Anordnung zur gegenseitigen Authentifizierung zweier Datenverarbeitungseinheiten mit Hilfe eines Challenge-Response-Verfahrens.

Die Authentifizierung von Datenverarbeitungseinheiten hat im Zusammenhang mit elektronischer Datenübertragung, elektronischer Unterschrift, Chipkarten, wie zum Beispiel Telefonkarten und Geldkarten eine große wirtschaftliche Bedeutung erlangt. Die Authentifizierung einer Datenverarbeitungseinheiten ist von großer Bedeutung, wenn lediglich berechtigte Benutzer oder Datenverarbeitungseinheiten Daten lesen bzw. modifizieren dürfen.

Bekannte Verfahren zur Authentifizierung von Datenverarbeitungseinheiten beruhen auf Challenge-Response-Verfahren auf Basis kryptographischer Verfahren, wie DES (Data Encryption Standard), RSA (Rivest Shamer Adelman) oder sogenannten Zero-Knowledge-Techniken von Fiat Schamir, Guillou Quisquater oder Schnorr.

Den Challenge-Response-Verfahren ist gemeinsam, daß eine Zufallszahl (Challenge) erzeugt und an die zu überprüfende Datenverarbeitungseinheit gesendet wird. Die zu überprüfende Datenverarbeitungseinheit erzeugt daraus mit Hilfe eines geeigneten kryptographischen Verfahrens eine Antwortzahl (Response), die an die prüfende Datenverarbeitung zurückgesendet wird. Anhand der Challenge und der Response überprüft die prüfende Datenverarbeitungseinheit die Authentizität der zu überprüfenden Datenverarbeitungseinheit.

Bei gegenseitiger Authentifizierung wird das Challenge-Response-Verfahren zweimal durchgeführt, wobei bei der zweiten Durchführung die Rollen der prüfenden Datenverarbeitungseinheit und der zu überprüfenden Datenverarbeitungseinheit getauscht werden, so daß jede Datenverarbeitungseinheit die andere überprüft.

Es ist die Aufgabe der Erfindung, ein vereinfachtes Verfahren zur gegenseitigen Authentifizierung zweier Datenverarbeitungseinheiten anzugeben. Zusätzlich ist es die Aufgabe der Erfindung, eine Anordnung anzugeben, mit der das Verfahren durchgeführt werden kann.

Erfindungsgemäß wird die gestellte Aufgabe durch ein Verfahren zur gegenseitigen Authentifizierung einer ersten Datenverarbeitungseinheit und einer zweiten Datenverarbeitungseinheit mit den folgenden Verfahrensschritten gelöst:
Erzeugen einer ersten Bitfolge in der ersten Datenverarbeitungseinheit; übertragen der ersten Bitfolge an die zweite Datenverarbeitungseinheit; erzeugen einer zweiten Bitfolge und einer dritten Bitfolge aus der ersten Bitfolge und ersten Daten mittels eines ersten Algorithmus in der zweiten Datenverarbeitungseinheit; übertragen der zweiten Bitfolge an die erste Datenverarbeitungseinheit; erzeugen eines ersten Authentifizierungsresultat und einer vierten Bitfolge aus der ersten Bitfolge, der zweiten Bitfolge und zweiten Daten mittels eines zweiten Algorithmus in der ersten Datenverarbeitungseinheit; erzeugen einer fünften Bitfolge aus der vierten Bitfolge und dritten Daten mittels eines dritten Algorithmus in der ersten Datenverarbeitungseinheit; übertragen der fünften Bitfolge an die zweite Datenverarbeitungseinheit; erzeugen eines zweiten Authentifizierungsresultats aus der dritten Bitfolge, der fünften Bitfolge und vierten Daten mittels eines vierten Algorithmus in der zweiten Datenverarbeitungseinheit.

Der Vorteil des erfindungsgemäßen Verfahrens besteht darin, daß die erste Bitfolge zur Authentifizierung der zweiten Datenverarbeitungseinheit durch die erste Datenverarbeitungseinheit verwendet wird und zur Berechnung der dritten und der vierten Bitfolge verwendet wird. Durch dieses Verfahren ist es möglich, die zweite Datenverarbeitungseinheit ohne einen Zufallsgenerator vorzusehen. Durch die Einsparung des Zufallsgenerators kann die zweite Datenverarbeitungseinheit wesentlich kompakter, einfacher und damit kostengünstiger ausgeführt werden. Dieses ist zum Beispiel entscheidend, wenn in einer Massenmarktanwendung wie Chipkarten ein sicheres Authentifizierungsverfahren verwendet werden soll. Die Einsparung eines Zufallsgenerators bedeutet eine enorme Vereinfachung der Datenverarbeitungseinheit, denn an den Zufallsgenerator werden erhebliche Anforderungen bezüglich Zufälligkeit und Unempfindlichkeit gegenüber äußeren Manipulationen gestellt. Trotz dieser enormen Vereinfachung können kryptographisch als sicher eingestufte kryptographische Verfahren, wie der DES, der RSA oder auch Zero-Knowledge-Techniken verwendet werden und behalten ihre Sicherheit bei. Dadurch erlangt das erfindungsgemäße Verfahren die gleichen Sicherheitsstandards, die von den zum Stand der Technik gehörenden Verfahren gewährleistet werden.

Eine vorteilhafte Ausprägung des erfindungsgemäßen Verfahrens sieht vor, daß die dritte Bitfolge von der zweiten Datenverarbeitungseinheit an die erste Datenverarbeitungseinheit übertragen wird und von dem zweiten Algorithmus verwendet wird, um das erste Authentifizierungsresultat und/oder die vierte Bitfolge zu erzeugen. Durch dieses Vorgehen kann eine größere Vielfalt von Berechnungsverfahren in dem zweiten Algorithmus verwendet werden, was den zweiten Algorithmus vereinfachen kann.

Weiterhin ist es vorteilhaft, daß die dritte Bitfolge ein Zwischenergebnis der Berechnung der zweiten Bitfolge ist. Durch dieses Vorgehen wird in dem ersten Algorithmus ein zusätzlicher Aufwand vermieden, so daß die Ausführung des ersten Algorithmus schneller durchgeführt werden kann.

Eine weitere vorteilhafte Ausprägung des Verfahren sieht vor, daß die erste Bitfolge zufällig erzeugt wird. Die Erzeugung einer zufälligen ersten Bitfolge erhöht die Sicherheit des Verfahrens.

Es ist von Vorteil, daß die erste Bitfolge so gewählt wird, daß sie sich von allen bereits verwendeten ersten Bitfolgen unterscheidet. Dadurch wird sichergestellt, daß ein Angreifer weder die erste Bitfolge, noch die daraus berechnete zweite Bitfolge vorhersagen kann. Dadurch wird die Sicherheit des Verfahrens erhöht.

Eine Anordnung zur Durchführung des erfindungsgemäßen Verfahrens besteht aus einer ersten Datenverarbeitungseinheit und einer zweiten Datenverarbeitungseinheit, wobei in der ersten Datenverarbeitungseinheit ein Bitfolgenerzeuger für die Erzeugung einer ersten Bitfolge angeordnet ist und wobei in der zweiten Datenverarbeitungseinheit eine erste Bitfolgenverarbeitungseinheit für die Erzeugung einer zweiten Bitfolge und einer dritten Bitfolge aus der ersten Bitfolge und ersten Daten angeordnet ist und wobei in der ersten Datenverarbeitungseinheit eine zweite Bitfolgenverarbeitungseinheit für die Erzeugung eines ersten Authentifizierungsresultats und einer vierten Bitfolge aus der ersten Bitfolge, der zweiten Bitfolge und zweiten Daten vorgesehen ist und wobei in der ersten Datenverarbeitungseinheit eine dritte Bitfolgenverarbeitungseinheit für die Erzeugung einer fünften Bitfolge angeordnet ist und wobei in der zweiten Datenverarbeitungseinheit eine vierte Bitfolgenverarbeitungseinheit für die Erzeugung eines zweiten Authentifizierungsresultats aus der dritten Bitfolge, der fünften Bitfolge und vierten Daten angeordnet ist.

Die Datenverarbeitungseinheiten können dabei zum Beispiel als Computer, Laptop, Palmtop, Handy, Handheld, Chipkarte, Geldkarte, Telefonkarte, Krankenkarte und eine Reihe weiterer TAGs ausgebildet sein, die direkt oder indirekt mit einer weiteren Datenverarbeitungseinheit kommunizieren können.

In einer vorteilhaften Ausprägung der erfindungsgemäßen Anordnung ist mindestens eine der Datenverarbeitungseinheiten als integrierte Schaltung ausgebildet. Dadurch ist eine sehr kompakte, platzsparende und reproduzierbar herzustellende Datenverarbeitungseinheit möglich.

In einer weiteren vorteilhaften Anordnung ist eine der Datenverarbeitungseinheiten mobil. Dadurch ist der einfache Transport der Datenverarbeitungseinheit möglich.

Weiterhin ist es vorteilhaft, daß eine der Datenverarbeitungseinheiten ein Schieberegister enthält, daß mit mindestens einem XOR-Gatter rückgekoppelt ist. Bei einem XOR-Gatter handelt es sich um eine logische Exklusiv-oder Funktion, die in einem Bauelement, das als Gatter bezeichnet wird, ausgebildet ist. Durch diese Anordnung ist ein sehr platzsparende, kryptographisch sichere Datenverarbeitungseinheit möglich. Das Schieberegister stellt dabei einen teil der Einheit dar, in der einer der vier Algorithmen ausgeführt wird.

Eine weitere vorteilhafte Anordnung sieht vor, daß eine Datenverarbeitungseinheit eine Chipkarte und die andere Datenverarbeitungseinheit ein Chipkartenterminal ist.

Weitere Ausgestaltungen der Erfindung sind in den Unteransprüchen angegeben.

Ausführungsbeispiele der vorliegenden Erfindung sind in den Zeichnungen dargestellt und werden nachfolgend näher erläutert.

In den Figuren zeigen:
Figur 1 Ein erstes erfindungsgemäßes Verfahren zur gegenseitigen Authentifizierung zweier Datenverarbeitungseinheiten;
Figur 2 Ein weiteres erfindungsgemäßes Verfahren zur gegenseitigen Authentifizierung zweier Datenverarbeitungseinheiten.

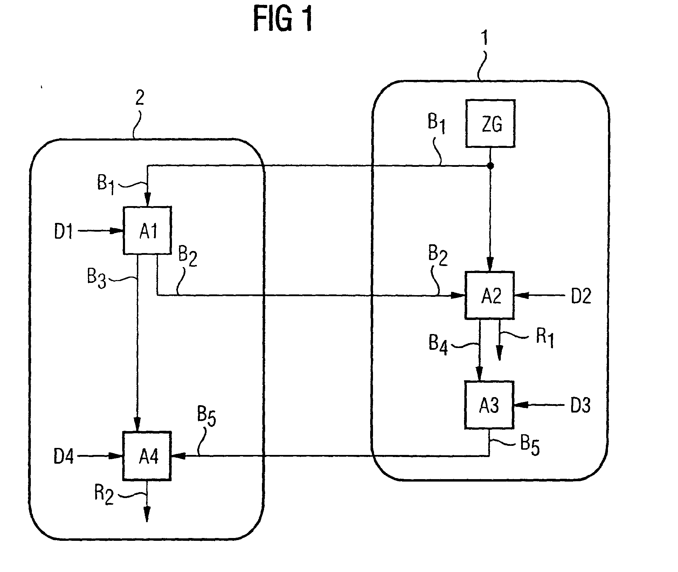

In Figur 1 ist ein System aus einer ersten Datenverarbeitungseinheit 1 und einer zweiten Datenverarbeitungseinheit 2 dargestellt. Weiterhin ist ein Flußdiagramm dargestellt, bei dem einige Verfahrensschritte in der ersten Datenverarbeitungseinheit 1 und andere Datenverarbeitungsschritte in der Datenverarbeitungseinheit 2 durchgeführt werden. Das Verfahren beginnt mit der Erzeugung eine ersten Bitfolge B1, die in der ersten Datenverarbeitungseinheit 1 in diesem Ausführungsbeispiel mit einem Zufallsgenerator ZG erzeugt wird. Die erste Bitfolge B1 wird von der ersten Datenverarbeitungseinheit 1 zu der zweiten Datenverarbeitungseinheit 2 übertragen und es wird in der zweiten Datenverarbeitungseinheit 2 eine zweite Bitfolge B2 und eine dritte Bitfolge B3 mit dem Algorithmus A1 aus der ersten Bitfolge B1 und ersten Daten D1 erzeugt.

Bei dem Algorithmus kann es sich um einen der aus dem Stand bekannten Algorithmus wie DES, RSA, etc. handeln. Bei den Daten Dl handelt es sich beispielsweise um einen geheimen Schlüssel und/oder andere zur Berechnung der zweiten Bitfolge B2 und/oder der dritten Bitfolge B3 benötigte Daten.

Anschließend wird die zweite Bitfolge B2 von der zweiten Datenverarbeitungseinheit 2 an die erste Datenverarbeitungseinheit 1 übertragen. In der ersten Datenverarbeitungseinheit 1 wird ein erstes Authentifizierungsresultat R1 als Ergebnis der Authentifizierung der zweiten Datenverarbeitungseinheit 2 durch die erste Datenverarbeitungseinheit 1 und es wird eine vierte Bitfolge B4 mit einem zweiten Algorithmus A2 aus der ersten Bitfolge B1, der zweiten Bitfolge B2 und zweiten Daten D2 erzeugt. Der zweite Algorithmus A2 ist entsprechend dem verwendeten Verschlüsselungsalgorithmus (DES, RSA, etc.) gewählt und korrespondiert mit dem ersten Algorithmus A1. Bei dem Die Daten D2 umfassen beispielsweise einen geheimen Schlüssel oder einen geheimen Master-Schlüssel, aus dem sich der geheime Schlüssel berechnen läßt. Bei dem RSA handelt es sich beispielsweise um einen privaten und/oder einen öffentlichen Schlüssel.

In der ersten Datenverarbeitungseinheit 1 wird eine fünfte Bitfolge B5 mit einem dritten Algorithmus A3 aus der vierten Bitfolge B4 und dritten Daten D3 erzeugt.

Die fünfte Bitfolge B5 wird von der ersten Datenverarbeitungseinheit 1 an die zweite Datenverarbeitungseinheit 2 übertragen.

In der zweiten Datenverarbeitungseinheit 2 wird ein zweites Authentifizierungsresultat R2 als Ergebnis der Authentifizierung der ersten Datenverarbeitungseinheit 1 durch die zweite Datenverarbeitungseinheit 2 mit einem vierten Algorithmus aus der dritten Bitfolge B3, der fünften Bitfolge B5 und vierten Daten D4 erzeugt.

Bei den Algorithmen A3 und A4 kann es sich beispielsweise um einen aus dem Stand der Technik bekannten Algorithmus (DES, RSA, etc.) handeln. Bei den Daten D3 und D4 handelt es sich zum Beispiel um geheime Schlüssel. Der Algorithmus A1 kann beispielsweise mit dem Algorithmus A3 übereinstimmen.

Fallen die beiden Authentifizierungsresultate positiv aus, so haben sich die erste Datenverarbeitungseinheit 1 und die zweite Datenverarbeitungseinheit 2 gegenseitig authentifiziert. Bei den Algorithmen A1, A2, A3 und A4 handelt es sich um beispielsweise kryptographische Verfahren. Bei den Daten D1, D2, D3 und D4 handelt es sich beispielsweise um geheime oder öffentliche Schlüssel, mit denen Bitfolgen B1, B2, B3 und B4 modifiziert werden. Der Vorteil dieses Verfahrens besteht darin, daß in der zweiten Datenverarbeitungseinheit 2 kein Zufallszahlengenerator erforderlich ist. Ein weiterer Vorteil dieses Verfahrens ist, daß lediglich drei Datenübertragungen zwischen der ersten Datenverarbeitungseinheit 1 und der zweiten Datenverarbeitungseinheit 2 notwendig sind. Herkömmlich sind 4 Datenübertragungen erforderlich.

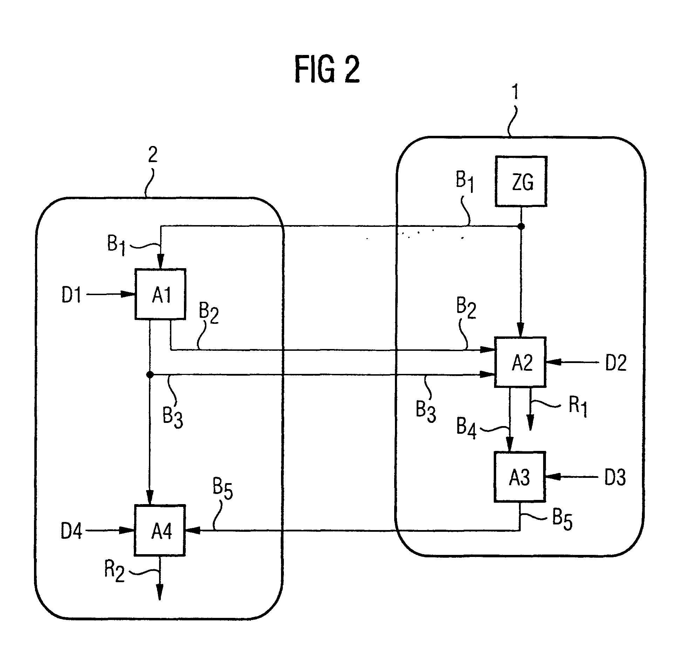

In Figur 2 ist ein weiteres erfindungsgemäßes Verfahren zur gegenseitigen Authentifizierung zweier Datenverarbeitungseinheiten dargestellt. Das in Figur 2 dargestellte Authentifizierungsverfahren unterscheidet sich von dem in Figur 1 dargestellten Authentifizierungsverfahren durch die Übertragung der dritten Bitfolge B3 von der zweiten Datenverarbeitungseinheit 2 zu der ersten Datenverarbeitungseinheit 1. Ein weiterer Unterschied zu Figur 1 besteht darin daß die dritte Bitfolge B3 in dem zweiten Algorithmus A2 verwendet wird, um die vierte Bitfolge und/oder das erste Authentifizierungsresultat R1 zu erzeugen. Die übrigen Verfahrensschritte werden ausgeführt, wie es in Zusammenhang mit Figur 1 beschrieben ist.

## Patentansprüche

1. Verfahren zur gegenseitigen Authentifizierung einer ersten Datenverarbeitungseinheit (1) und einer zweiten Datenverarbeitungseinheit (2) mit den folgenden Verfahrensschritten:
- Erzeugen einer ersten Bitfolge (B1) in der ersten Datenverarbeitungseinheit (1);
- übertragen der ersten Bitfolge (B1) an die zweite Datenverarbeitungseinheit (2);
- erzeugen einer zweiten Bitfolge (B2) und einer dritten Bitfolge (B3) aus der ersten Bitfolge (B1) und ersten Daten (Dl) mittels eines ersten Algorithmus (A1) in der zweiten Datenverarbeitungseinheit (2);
- übertragen der zweiten Bitfolge (B2) an die erste Datenverarbeitungseinheit (1);
- erzeugen eines ersten Authentifizierungsresultat (R1) und einer vierten Bitfolge (B4) aus der ersten Bitfolge (B1), der zweiten Bitfolge (B2) und zweiten Daten (D2) mittels eines zweiten Algorithmus (A2) in der ersten Datenverarbeitungseinheit (1);
- erzeugen einer fünften Bitfolge (B5) aus der vierten Bitfolge (B4) und dritten Daten (D3) mittels eines dritten Algorithmus (A3) in der ersten Datenverarbeitungseinheit (1);
- übertragen der fünften Bitfolge (B5) an die zweite Datenverarbeitungseinheit (2);
- erzeugen eines zweiten Authentifizierungsresultats (R2) aus der dritten Bitfolge (B3), der fünften Bitfolge (B5) und vierten Daten (D4) mittels eines vierten Algorithmus (A4) in der zweiten Datenverarbeitungseinheit (2).

2. Verfahren nach Anspruch 1
**dadurch gekennzeichnet,** daß
die dritte Bitfolge (B3) von der zweiten Datenverarbeitungseinheit (2) an die erste Datenverarbeitungseinheit (1) übertragen wird und von dem zweiten Algorithmus (A2) verwendet wird, um das erste Authentifizierungsresultat (R1) und/oder die vierte Bitfolge (B4) zu erzeugen.

3. Verfahren nach einem der Ansprüche 1 oder 2
**dadurch gekennzeichnet,** daß
die dritte Bitfolge (B3) ein Zwischenergebnis bei der Berechnung der zweiten Bitfolge (B2) ist.

4. Verfahren nach einem der Ansprüche 1 bis 3
**dadurch gekennzeichnet,** daß
die erste Bitfolge (B1) zufällig erzeugt wird.

5. Verfahren nach einem der Ansprüche 1 bis 4
**dadurch gekennzeichnet,** daß
die erste Bitfolge (B1) so gewählt wird, daß sie sich von allen bereits verwendeten ersten Bitfolgen (B1) unterscheidet.

6. Anordnung zur Durchführung eines Verfahrens nach einem der Ansprüche 1 bis 6, bestehend aus
- einer ersten Datenverarbeitungseinheit (1) und
- einer zweiten Datenverarbeitungseinheit (2),
- wobei in der ersten Datenverarbeitungseinheit (1) ein Bitfolgenerzeuger (ZG) für die Erzeugung einer ersten Bitfolge (B1) angeordnet ist und
- wobei in der zweiten Datenverarbeitungseinheit (2) eine erste Bitfolgenverarbeitungseinheit (A1) für die Erzeugung einer zweiten Bitfolge (B2) und einer dritten Bitfolge (B3) aus der ersten Bitfolge (B1) und ersten Daten (D1) angeordnet ist und
- wobei in der ersten Datenverarbeitungseinheit (1) eine zweite Bitfolgenverarbeitungseinheit (A2) für die Erzeugung eines ersten Authentifizierungsresultats (R1) und einer vierten Bitfolge (B4) aus der ersten Bitfolge (B1), der zweiten Bitfolge (B2) und zweiten Daten (D2) vorgesehen ist und
- wobei in der ersten Datenverarbeitungseinheit (1) eine dritte Bitfolgenverarbeitungseinheit (A3) für die Erzeugung einer fünften Bitfolge (B5) angeordnet ist und
- wobei in der zweiten Datenverarbeitungseinheit (2) eine vierte Bitfolgenverarbeitungseinheit (A4) für die Erzeugung eines zweiten Authentifizierungsresultats (R2) aus der dritten Bitfolge (B3), der fünften Bitfolge (B5) und vierten Daten (D4) angeordnet ist.

7. Anordnung nach Anspruch 6,
**dadurch gekennzeichnet**, daß
mindestens eine der Datenverarbeitungseinheiten (1) oder (2) als integrierte Schaltung ausgebildet ist.

8. Anordnung nach einem der Ansprüche 6 oder 7,
**dadurch gekennzeichnet,** daß
eine der Datenverarbeitungseinheiten (1) oder (2) ein Schieberegister enthält, daß mit mindestens einem XOR-Gatter rückgekoppelt ist.

9. Anordnung nach einem der Ansprüche 6 bis 8,
**dadurch gekennzeichnet,** daß
eine Datenverarbeitungseinheit eine Chipkarte und die andere Datenverarbeitungseinheit ein Chipkartenterminal ist.
